# EUROPEAN PATENT APPLICATION

(11) **EP 1 870 889 A1**
(43) Date of publication of application: **26.12.2007**
(21) Application number: 06012838.6
(22) Date of filing: 22.06.2006
(51) Int. Cl.: G11B 17/22, G11B 23/50

(54) **Electronic-mechanical apparatus for playing back optical disks**

(71) Applicant: Travagin, Nicola, 30014 Cavarzere VE (IT)
(72) Inventor: Travagin, Nicola, 30014 Cavarzere VE (IT)
(74) Representative: Reniero, Cirillo Silvano

(57) **Abstract**

An electronic-mechanical apparatus (1) for playing back optical disks, usually termed juke-box, comprises receiving means (5) for a plurality of optical disks (D), playback means (7) for an optical disk (D), selector means (T) for selecting an optical disk (D) to be played back, and handling means (6) for withdrawing an optical disk from the receiving means and transferring it to the playback means (7), as well as for withdrawing it from the playback means (7) and re-placing it into its respective receiving means (5). The electronic-mechanical apparatus (1) further comprises a ionizing means (10) for trapping any dust, a programmable electronic control unit (14), and a scanner (18).

## Description

The present invention relates, in general, to an electronic-mechanical apparatus for playing back recorded disk members, particularly an electro-mechanical apparatus for playing back optical disks, e.g. CD (Compact Disk) and DVD (Digital Versatile Disk).

Electronic-mechanical apparatus for playing back recorded disk members are known in the art, which can be usually set in operation by a coin or money, of the type generally termed "juke-box". For the purposes of the present invention the term juke-box includes any automatic apparatus, mostly installed in public premises, which are loaded with a plurality of disks, compact disks or musical videos, that can be listened by inserting a coin, one ore more moneys, banknotes, or a credit card into the apparatus.
Conventional juke-boxes typically comprise a housing frame for a disk player or playback device, displaying means for displaying information on the disks, videos available for being played, a start switch operable by a money selector device or a banknote reader, a plurality of selection keys for selecting a desired disk or video among those available on a rotatable storing platform designed to store disks in the juke-box, a driving means arranged to rotate the rotatable platform in order to transfer the selected disk to a predetermined drawing position, output means, typically at least one laud speaker electrically connected to the playback device, and a withdrawing and loading arm arranged to withdraw a selected disk from the rotatable platform and to transfer it to the playback device and to return the same to the rotatable platform once the selected disk has been played back.

In the past, juke-boxes were used to playback vinyl disks. Owing to the rapid technological progress, the vinyl disks have been replaced by optical disks, e.g. CD, DVD, and more recently by mp3 audio files. Juke-boxes have been therefore put on the market, in which the vinyl disks could been replaced by CD, DVD, or mp3 files. In this case, the juke-box also includes storage means which makes it possible to copy and set in order different tracks of CD or DVD, and different music files.

As known, optical disks, such as CD and DVD, are disks of plastic material coated with a reflecting material and readable by a laser beam. Optical disks are, however, adversely affected by powder, light, and heat, while being much less sensitive to mechanical stresses than vinyl disks. More particularly, powder deposited onto the surface of the CD or DVD causes the lens of the reading laser beam to become dirty, which causes reading problems that adversely affect the playback apparatus and thus the playback quality.

In the juke-boxes available at present on the market for playing-back optical disks, CD or DVD are subjected to periodical maintenance operations by being extracted one by one from a suitable receiving seat in the storage platform, and by gently cleaning the surface by means of a dry cloth or, more recently, a damp cloth using a suitable detergent. It is also possible to improve the optical quality of the surface of a CD or DVD by applying suitable treating products thereon, which, besides the normal cleaning action, carry out also a protective action on the optical disk surface.

Quite understandably such periodical maintenance operations, while being effective in removing powder from the optical disk surface, require that each disk be removed from its respective radial receiving seat provided in the storage platform, cleaned, and then placed back into its respective receiving seat, which results in long maintenance times. Apart from the actual risk of permanently damaging the disk while carrying out each removal and re-positioning operation, with a consequent increased reading difficulty by the laser beam, such an operation does not provide the desired results, as the surface of the CD or DVD can become easily grooved owing to the scraping action of powder granules on the disk surface when it is wiped through a cloth. Accordingly, after a few cleaning operations, the optical features of the disk become seriously damaged which affects the quality of both the reading and the played-back sound.

The main object of the present invention is to provide an electronic-mechanical apparatus for playing-back optical disks, which is suitable for eliminating or drastically reducing the above mentioned drawbacks.

Another object of the present invention is to provide an electronic-mechanical apparatus for playing-back optical disks, which is provided with a programmable electronic control unit designed to control both the selection and the playback operation of a desired music track or video by a user means, and any CD or DVD filing, apparatus-setting and diagnostic operations carried out by a maintenance operator, and which is easy and simple to use by both the user and the maintenance operator.

According to a first aspect of the present invention, there is provided an apparatus for playing-back optical disk comprising:
- a support frame delimiting at least one upper space and at least one lower space,
- receiving means for a plurality of disk members arranged in at least one of said upper and lower spaces;
- playback means for a disk member;
- selector means for selecting a disk member to be played back;
- handling means for withdrawing a disk member from its respective receiving means and transferring it to said playback means, and for withdrawing it from said playback means and placing it back into its respective receiving means;
- driving means suitable for controlling a relative motion between said receiving means and said handling means, thereby causing a disk selected by said selector means to be placed in a position reachable by said handling means; and
- control means for said playback means,
characterized in that at least one ionizing means is provided in said at least one upper and lower spaces where said receiving means are located, for trapping any powder.

According to another aspect of the present invention, there is provided an electronic-mechanical apparatus for playing back optical disks comprising:
- a support frame delimiting at least one upper space and at least one lower space,
- receiving means for a plurality of disk members arranged in at least one of said upper and lower spaces;
- playback means for a disk member;
- selector means for selecting a disk member to be played back at a time;
- handling means for withdrawing a disk member from its respective receiving means and transferring it to said playback means, and for withdrawing it from said playback means and placing it back into its respective receiving means;
- driving means suitable for controlling relative motion between said receiving means and said handling means, thereby causing a disk selected by said selector means to be located in a place reachable by said handling means; and
- control means for said playback means,
characterized in that said control means comprises a programmable electronic control unit located in at least one upper/lower space in said frame.

Further features and advantages of the present invention will better appear from the following detailed description of a presently preferred, but non limiting embodiment of an electronic-mechanical apparatus for playing back optical disks given with reference to the accompanying drawings, in which:

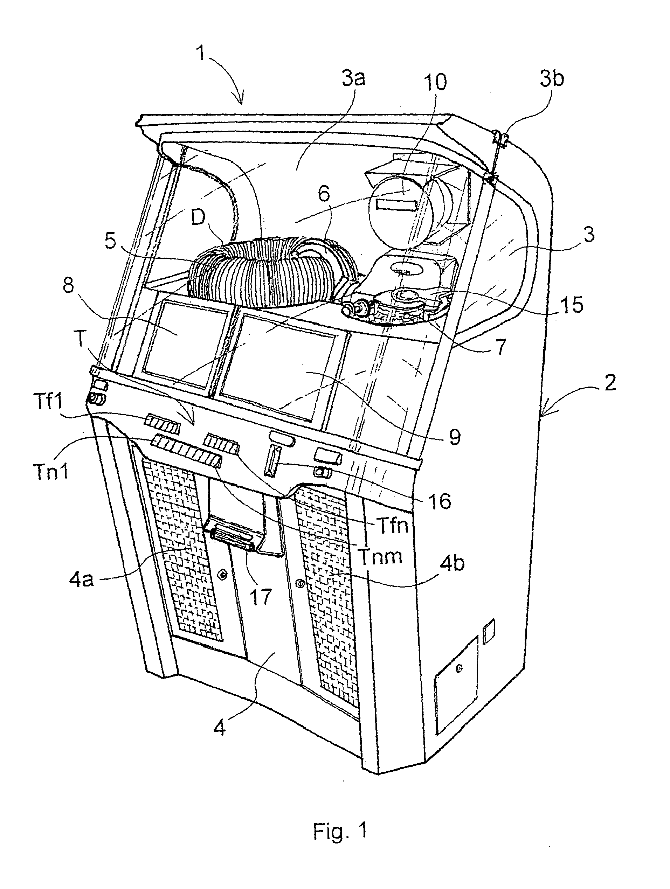

Figure 1 is a perspective view of an electronic-mechanical apparatus for playing back optical disks according to the present invention;
Figure 2 is a perspective view on an enlarged scale of a ionizing device included in the apparatus of Figure 1;
Figure 3 is a diagrammatic perspective view of a programmable electronic control unit of the apparatus of Figure 1;
Figure 4 is a detailed view on an enlarged scale of a scanner while scanning a cover of a CD or DVD to be loaded into the electronic-mechanical apparatus of Figure 1;
Figure 5 is a block diagram illustrating the main operations carried out by function keys of the electronic-mechanical apparatus of Figure 1; and
Figure 6 is a block diagram of the functions accessible through the "Control Centre" function key of Figure 5.

With reference to the above listed Figures, it is noted that an electronic-mechanical apparatus according to the present invention, generally designed by 1, for playing back optical disks has a support frame 2 which delimits an upper space 3 and a lower space 4. The upper space 3 is dustproof closed at the front thereof by a door or capote 3a, e. g. hinged at 3b to the frame 2 thereby being able to be opened-closed through a lifting/lowering movement and, preferably, made of a transparent (plastic) material.
Inside the upper space 3 there are provided a plurality of receiving seats 5, preferably a continuous sequence of radial receiving seats circularly placed around a substantially vertical axis of rotation on a rotatable platform (not shown in drawings), each receiving seat 5 being delimited by a pair of walls for loosely receiving a respective disk member D, e.g. an optical disk (CD, DVD). In the upper space 3 an optical disk reader is also arranged, typically a laser beam reader 7 provided with a control device and an arm or cover 15, which can be hingedly lifted and lowered, as further described below.

At the front portion of the frame 2, outside the upper space 3, there are provided a plurality of user's selector keys T, for selecting a disk member D to be played back, as described below. Over the selector keys T there are provided one or more display means, preferably two, e.g. two monitors 8 and 9.

Between the rotatable platform and the laser beam reader 7, in the space 3, an handling device, e.g. a known device comprising a mechanical arm 6 suitable for withdrawing a disk member D which is pre-selected by user through the selection keys T and housed in its respective receiving seat 5 on the rotatable platform, and for transferring the same onto the laser beam reader 7 for being played back, as well as for withdrawing it from the reader 7 and replacing it into the starting receiving seat 5.

In the upper space 3, at any suitable position, e.g. at the rear portion of the space 3, a ionizing device 10 is arranged, e.g. a ionizing device model Allergy 2679, produced and distributed by the company Beghelli S.p.a. at Monteveglio - Bologna - Italy.

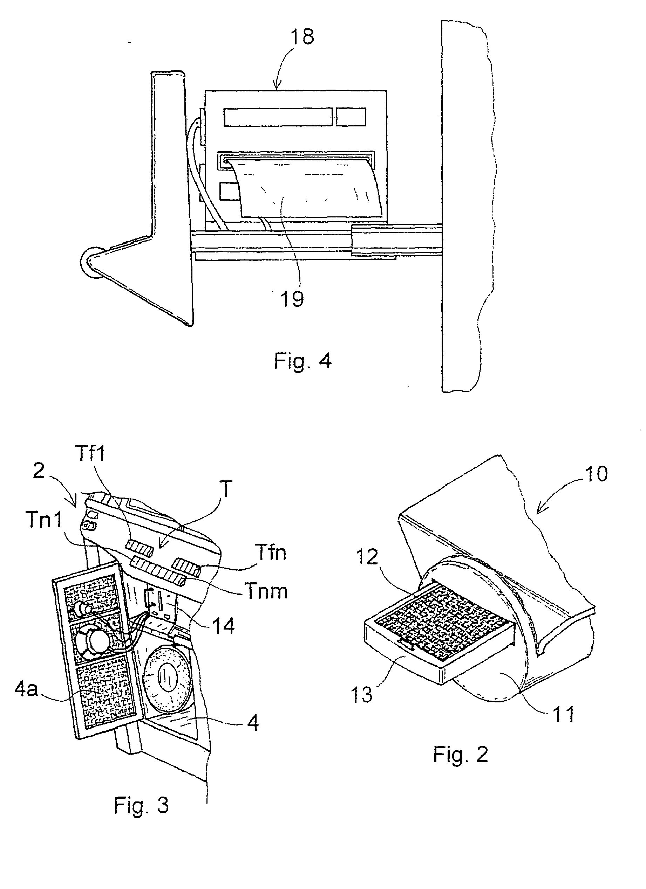

As shown in more detail in Figure 2, the ionizing device 10 comprises a box-like receiving body 11, in which e. g. a plurality of electrostatically chargeable metal needles designed to ionize the ambient air inside the space 3 are located. For optimal efficiency of the ionizing device, a system for forcing the air to pass through the ionizing needles is provided, and to this end a forced air path comprising an inlet for the ambient air and an outlet for the ionized air, as well as a fan and a filter 12 for the air being fed to the ionizing device are provided. Preferably, the filter 12 is a metal filter, which advantageously can be easily cleaned, e.g. by washing it with tap water. Owing to the presence of this filtering ionizing device, the air inside the upper space 3 is kept continuously filtered, i.e. any dust present therein is continuously captured, whereby disks D on the storage platform remain permanently cleaned.

The air inside the upper space 3 is, then, sucked by the fan, passes through the metal filter 12, preferably comprising a series of metal grids, the filter trapping any dirt in it, and more particularly any dust, and is ionized by the ionizing needles before being fed back into the upper space 3. Advantageously, the metal filter 12 is contained in a drawer 13, which can be easily extracted for being washed from time to time.

The lower space 4 is preferably frontally closed by two doors 4a and 4b, and encloses control means therein, e.g. as it is usual in the art, one or more electric motors, motion transmission means, and the like, which are arranged to drive the receiving seat 5, the mechanical arm 6, and the laser beam reader 7. The front opening of the lower space of the apparatus 1 ensures major practical advantages with respect to the prior art juke-boxes that have their lower space accessible only from the rear portion of the frame 2.

According to the present invention, the control means preferably placed in the lower space 4 also comprises a programmable electronic control unit 14, which includes a master card electrically connected to a suitable microprocessor, a mass memory, e.g. an hard-disk, a DAT unit or the like, and a main control program.

At an intermediate position between the upper space 3 and the lower space 4, as mentioned above, there is provided a plurality of selector keys T, preferably placed in two rows. More particularly, the first row will include a plurality of function keys T_{f1}, ..., T_{fn}, whereas the second row will include a plurality of numeric keys Tₙ₁, ..., T_{nm.}

Each function key T_{f1}, ..., T_{fn}, allows the user to gain access to a series of monitor displayed functions controlled by the programmable electronic control unit 14 according to a mode that will be described in detail below and displayed on one or both the monitors 8 and 9, thereby assisting the user in choosing a CD of interest for him.

Each numeric key T_{n1,} ..., Tₙₘ allows the user to select first the number corresponding to the CD possibly previously selected owing to the use of the function keys T_{f1}, ..., T_{fn}, and then the number of the track the user wishes to listen to, and the track thus selected is then played back by the laser beam reader 7. Advantageously, to facilitate the choice of the track, the front of the cover of any selected CD will be displayed on one of two monitors 8 or 9, and the rear of the same cover bearing the list of the respective tracks will be displayed on the other monitor.

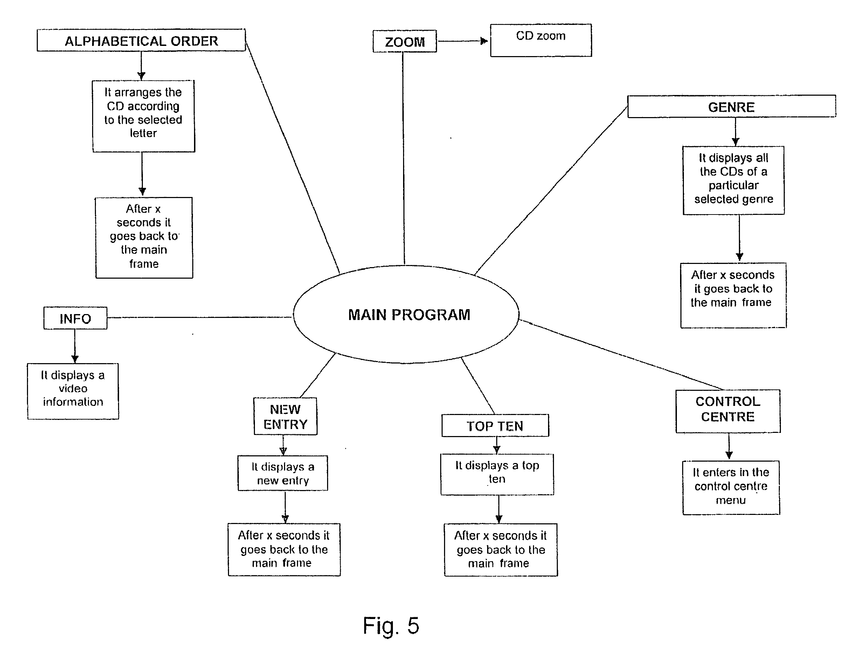

As better shown in Figure 5, the function keys T_{f1}, ..., T_{fn}, which are controlled by the main program installed in the programmable electronic control unit 14, are arranged to activate the following functions: "Alphabetical Order", "Genre", "Info", "New Entry", "Top Ten", "Zoom", and "Control Centre". The function key "Control Centre" is displayed by a maintenance operator, and will be described below.

More particularly:
- upon acting on the "Alphabetical Order" function key, the main program will display on one monitor 8 or 9 an option for choosing a letter relating to the CD title, and, when the desired CD has been chosen by the user, the disk cover is displayed on the other monitor 9 or 8;
- upon acting on the "Genre" function key, the main program will display on one monitor 8 or 9 options for choosing a musical genre, e.g. rock, classic, etc., and any CD belonging to that genre;
- upon acting on the "Info" function key, the main program will display on one monitor 8 or 9 information concerning a CD previously selected;
- upon acting on the "New Entry" function key, the main program will display on one monitor 8 or 9 a list of new entries;
- upon acting on the "Top Ten" function key, the main program will display on one monitor 8 or 9 a list of the current best ten CDs; and
- upon acting on the "Zoom" function key and, for example, while keeping the key pressed, the main program will display on one monitor 8 or 9 an enlarged image of the cover of the selected CD.

For the functions "Alphabetical Order", "Genre", "New Entry" and "Top Ten", after a predetermined number of seconds, the main frame will be displayed back on one of the monitors 8 or 9.

After the user has decided which CD he/she wants to listen to and has acted upon function keys T_{f1}, ..., T_{fn}, if required, he/she has to insert a coin or a banknote into suitable coin or money and/or banknote collector means 16 and 17, and to digit through numeric keys Tₙ₁, ..., Tₙₘ the number to which the desired CD is associated, and then the number of the desired track that he/she wants to listen to. At this point, the programmable electronic control unit 14 will automatically control the sequence of operations to be carried out as set forth in detail below.

The receiving or housing means 5 for the plurality of CDs starts to rotate until the receiving seat containing the selected CD is located at the mechanical arm 6. At the same time, the closing cover or arm 15 lifts to its open position to permit free access to the laser beam reader 7. The mechanical arm 6 thus carries out a series of movements suitable for withdrawing the selected CD from its receiving seat 5 and transferring the same onto the laser beam reader 7, which is now accessible. Then the closing cover 15 is lowered and the CD selected track begins to be played back by the laser beam reader 7.

After the playback, the closing cover 15 is lifted thus releasing the CD, which is then withdrawn by the mechanical arm 6 and re-located into its respective seat in the receiving means 5. The closing cover 15 lowers onto the reader 7 at the same time.

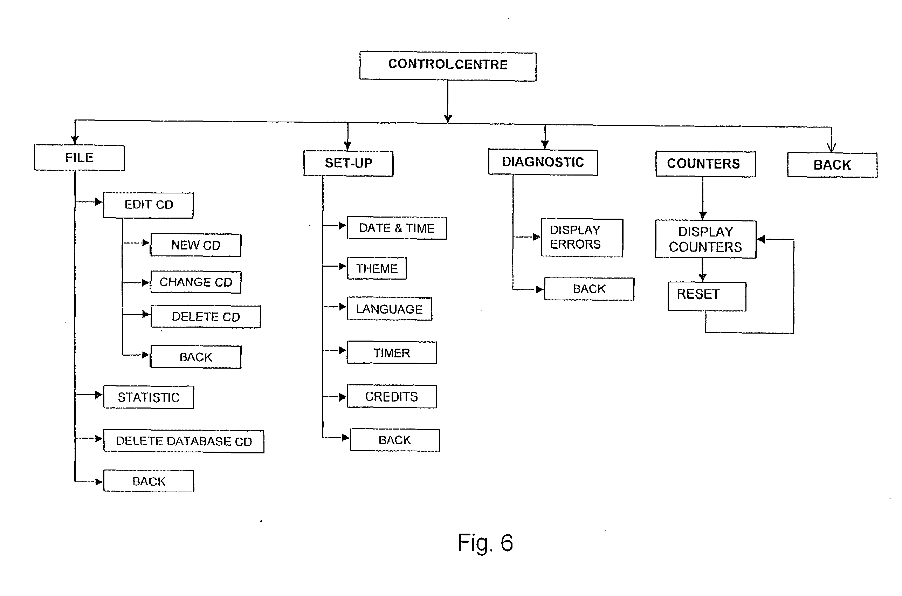

Figure 6 shows in more detail the characteristics associated to the "Control Centre" function key illustrated in Figure 5.

As described above, the "Control Centre" function key is designed to be used by a maintenance operator, and, as the remaining function keys T_{f1}, ..., T_{fn}, is interfaced with the main program of the programmable electronic control unit 14. By acting upon the "Control Centre" function key it is possible to gain access to a certain number of functions, e.g. "File", "Set-up", "Diagnostics", and "Counter".

Advantageously, the access to, and control of, the above-mentioned functions occur by using a touch-screen technology.

More particularly:
- "File" function comprises the following sub-functions: "Edit CD", "Statistic", "Delete database CD", and "Back". The "Edit CD" sub-function includes, in turn: "New CD" function, for storing in the mass memory of the programmable electronic control unit 14 the cover, title list, and tracks of a CD to be loaded into the receiving means 5; "Change CD" function for changing cover, title list, and tracks of a CD; "Delete CD" function for deleting cover, title list, and tracks of a stored CD; "Statistic" function for storing any statistics; and "Back" function for returning to the "File" function;
- "Set-up" function comprises the "Date & Time", Themes", "Language", "Timer", "Credits" sub-functions, for setting parameters, such as date and time, musical themes, languages, timers, and credit rules, and the "Back" sub-function for returning to the "File" function;
- "Diagnostic" function comprises the following sub-functions: "Display Errors", for displaying to the maintenance operator any errors present in the different components of the whole electronic-mechanical apparatus 1, and "Back" for returning to the "File" function;
- "Counters" function comprises the "Display Counters" and "Reset" sub-functions for displaying and resetting counters, which provide information concerning the number of times in which a particular track has been played back, thereby allowing, for example, the maintenance operator to replace one or more CD, tracks of which have been poorly selected or have not been selected with new CDs.

Advantageously, the electronic-mechanical apparatus 1 for playing back optical disks according to the present invention has a scanner 18, preferably a roll scanner, more preferably a single-pass flatbed scanner, e.g. placed at the insertion and collection means (16, 17) for coins, money and/or banknotes. The scanner 18 also is interfaced with the programmable electronic control unit 14 and allows the maintenance operator to carry out a scanning operation of the front and the rear portion of the cover 19 (Figure 4) of a CD that one wants to load into a respective receiving seat 5, and to store the respective scanned images in the mass memory of the programmable electronic control unit 14. These images will thus be controlled by the main program of the programmable electronic control unit 14 thereby being displayed on monitors 8 and 9.

In the case in which a scanner 18 is provided, the function "Set-up" will also include a "Scanner" sub-function to set-up the parameters concerning the scanner 18.

The invention as described above is susceptible to numerous modifications and variations within the scope as defined by the accompanying claims.

Thus, for example the playback means for sound tracks could be assisted by video playback means corresponding to a played back sound track.

Moreover, although a rotatable platform (receiving means 5) has been described which is angularly displaced with respect to the mechanical arm 6, the receiving means 5 can clearly be fixed, whereas the mechanical arm can be variously located with respect thereto.

## Claims

1. An electronic-mechanical apparatus for playing back optical disks comprising:
- a support frame (2), which delimits at least one upper space (3) and at least one lower space (4);
- receiving means (5) for a plurality of disk members (D) arranged in at least one of said upper and lower spaces (3, 4);
- playback means (7) for a disk member (D);
- selector means (T) for selecting a disk member (D) to be played back;
- handling means (6) for withdrawing a disk member (D) from its respective receiving means (5) and transferring it to said playback means (7), and for withdrawing it from said playback means (7) and placing it back into its respective receiving means (5);
- driving means suitable for controlling relative motion between said receiving means (5) and said handling means (6), thereby causing a disk (D) selected by said selector means (T) to be placed in a position reachable by said handling means (6); and
- control means for said driving means and said playback means (7),
**characterized in that** at least one ionizing means (10) for trapping dust is provided in said at least one space (3, 4) in which said receiving means (5) are arranged.

2. An electronic-mechanical apparatus for playing back optical disks comprising:
- a support frame (2) which delimits at least one upper space (3) and at least one lower space (4);
- receiving means (5) for a plurality of disk members (D) placed in at least one of said upper and lower spaces (3, 4);
- playback means (7) for a disk member (D);
- selector means (T) for selecting a disk member (D) to be played back;
- handling means (6) for withdrawing a disk member (D) from its respective receiving means (5) and transferring it to said playback means (7), and withdrawing it from said playback means (7) and re-placing it into its respective receiving means (5);
- driving means suitable for controlling relative motion between said receiving means (5) and said handling means (6), thereby causing a disk (D) selected by said selector means (T) to be located in a reachable position by said handling means (6); and
- control means for said driving means and said playback means (7),
**characterized in that** said control means comprises a programmable electronic control unit (14) arranged in at least one space (3, 4) of said frame (2).

3. An electronic-mechanical apparatus for playing back optical disks **characterized**
**in that** it comprises at least one ionizing means (10) as claimed in claim 1, and programmable electronic control unit (14) as claimed in claim 2.

4. An apparatus as claimed in claim 2 or 3, **characterized in that** said programmable electronic control unit comprises a main managing program for the following functions: "Alphabetical Order", "Genre", "Info", "New Entry", "Top Ten", "Zoom", and "Control Centre".

5. An apparatus as claimed in claim 4, **characterized in that** said selector means (T_{f1}, ..., T_{fn}; Tₙ₁, ..., Tₙₘ) comprises a multiplicity of function keys (T_{f1}, ..., T_{fn}) and a plurality of numeric keys (Tₙ₁, ..., Tₙₘ).

6. An apparatus as claimed in claim 5, **characterized in that** said function keys are designed to activate said "Alphabetical Order", "Genre", "Info", "New Entry", "Top Ten", "Zoom", and "Control Centre" functions.

7. An apparatus as claimed in any previous claim, **characterized in that** at least one displaying means (8, 9) is provided in said frame (2).

8. An apparatus as claimed in claim 7, **characterized in that** said at least one displaying means (8, 9) operates in touch-screen mode.

9. An apparatus as claimed in claim 5 or 6, **characterized in that** said multiplicity of function keys (T_{f1}, ..., T_{fn}) interfaces with the main program of the programmable electronic control unit (14) thereby producing an output on at least a monitor (8, 9).

10. An apparatus as claimed in any claim 5 to 9, **characterized in that** the function key "Control Centre" allows the operator to accede the "File", "Set-up", "Diagnostics", "Counters", "and "Exit" functions.

11. An apparatus as claimed in claim 10, **characterized in that** said "File" function comprises the following sub-functions: "Edit CD", "Statistic", "Delete Database CD", and "Back".

12. An apparatus as claimed in claim 10, **characterized in that** the "Set-up" function comprises the following sub-functions: "Date & Time", "Themes", "Language", "Timer", "Credits", and "Back".

13. An apparatus as claimed in claim 10, **characterized in that** the "Diagnostics" function comprises the following sub-functions: "Display Error", and "Back".

14. An apparatus as claimed in claim 10, **characterized in that** the function "Counter" comprises the following sub-functions: "Display Counter", "Reset", and "Back".

15. An apparatus as claimed in any previous claim, **characterized in that** at least one scanning means (18) is provided in said frame (2).

16. An apparatus as claimed in any claim 1, and 3 to 15, **characterized in that** said ionizing means comprises a forced air circuit, and a forced air removable filter 12.
